# EUROPEAN PATENT SPECIFICATION

(11) **EP 2 239 187 B1**
(45) Date of publication and mention of the grant of the patent: **14.11.2012**
(21) Application number: 09157459.0
(22) Date of filing: 07.04.2009
(51) Int. Cl.: B66F 9/075

(54) **Industrial truck with system for detection of the position of a pivotal platform**
Industriefahrzeug mit System zur Erfassung der Position einer Drehplattform
Véhicule industriel avec système de détection de la position d'une plate-forme pivotante

(43) Date of publication of application: 13.10.2010
(73) Proprietor: BT Products AB, 595 81 Mjölby (SE)
(72) Inventor: Lennartsson, Sven-Inge, SE-590 19, Mantorp (SE)
(74) Representative: Börlin, Maria

(56) References cited:
- EP-A- 1 980 523
- WO-A-2006/078579
- DE-A1- 10 159 565
- DE-A1-102004 051 018
- DE-C1- 19 734 096
- JP-A- 2002 128 485
- US-A- 4 986 280
- US-A1- 2005 000 268
- US-A1- 2007 182 121

## Description

### TECHNICAL FIELD

The present invention relates to an industrial truck with a pivotal platform and a system for detection of the position of the pivotal platform for the driver.

### BACKGROUND ART

In certain truck types, for example tiller arm trucks the driver of the truck may either steer the truck while standing on a platform on the truck, or while walking behind the truck. For safety reasons it is important to limit certain functions in these types of trucks, for example the maximum velocity of the drive wheel if the driver is walking behind the truck while steering the truck.

It is known in the art to arrange sensors which detects if the driver is present on the driver's platform. The signals from the sensors are used in the control system of the truck to enable or disable certain functions.

EP 1980523 A2 describes an industrial truck according to the preamble of claim 1, namely a tiller arm type truck. The truck comprises a pivotal platform on which the driver may stand when driving the truck. A sensor in the form of a switch is arranged to detect the presence of a driver on the platform by detecting if the platform is in a lowered or in a raised position. If the sensor detects that the platform is lowered the control system sets the truck in a driving mode. If the sensor detects that the platform is raised the control system sets the truck in a walking mode.

JP 2002128485 A describes a tiller arm truck which comprises a pivotal platform. A sensor in the form of a switch is arranged in the platform. When the platform is lowered by an angle B the switch changes state and the truck is set into a driving mode.

In the sensor arrangements described above the position of the sensor needs to be aligned with the platform for an accurate measurement of the position of the platform. The alignment is achieved by manual adjustment of the physical position of the sensor. This is time consuming and the accuracy of the alignment depends on the skill of the person performing the adjustment. The alignment between the sensor and the platform may become offset after some time due to mechanical tolerances caused by wear of the truck. The realignment of the sensor with the platform is even more time consuming since parts of the truck need to be dismounted in order to access the sensor.

Due to dimensional requirements and mechanical tolerances of different truck types it is further necessary to design specific sensor arrangements for different truck types. This increases the manufacturing cost of the truck.

Thus, one object of the present invention is to provide an improved system for detecting the position of the platform which does not involve manual adjustment.

A further object of the present invention is to provide an improved system for detecting the position of the platform which may be used in different truck types or different platform arrangements.

### SUMMARY OF THE INVENTION

These objects are achieved byan industrial truck according to claim 1.

According to one alternative, the sensor is an analogue sensor or a digital sensor of high resolution. These types of sensors are cost effective, accurate and easy to install.

According to one alternative, the sensor is a magnetic sensor. This contact less type of sensor has the advantage of long service life.

The platform preferably comprises a shaft which is arranged rotatable in a support on the truck, wherein the sensor preferably comprises a first part which is arranged on the end of the shaft and second part which is arranged on the support, wherein the signal from the sensor is proportional to the angle of rotation between the shaft and the support.

Preferably, the control system is arranged to control safety functions in the truck when the platform is in vertical position or upward inclined position or horizontal position, wherein the position determination unit comprises signal values corresponding to vertical position or upward inclined position or horizontal position of the platform.

Advantageously, the position determination unit comprises several values for different horizontal positions. The system may thereby be configured with horizontal positions personalized for different drivers, e.g. drivers of different body weight.

These aforementioned objects are advantageously achieved in an industrial truck comprising a pivotal platform, wherein the truck comprises the system for determining the position of a pivotal platform.

### BRIEF DESCRIPTION OF THE DRAWINGS

Figure 1 illustrates schematically a first type of truck with a pivotal platform for the driver according to the invention.
Figure 2a and 2b illustrates schematically a second type of a truck with a pivotal platform for the driver according to the invention.
Figure 3 illustrates schematically a pivotal platform comprising parts of the system according to the invention.
Figure 4 illustrates schematically a first embodiment of the system for detecting the position of the platform.
Figure 5 illustrates schematically a second embodiment of the system for detecting the position of the platform according to the invention.

### DETAILED DESCRIPTION

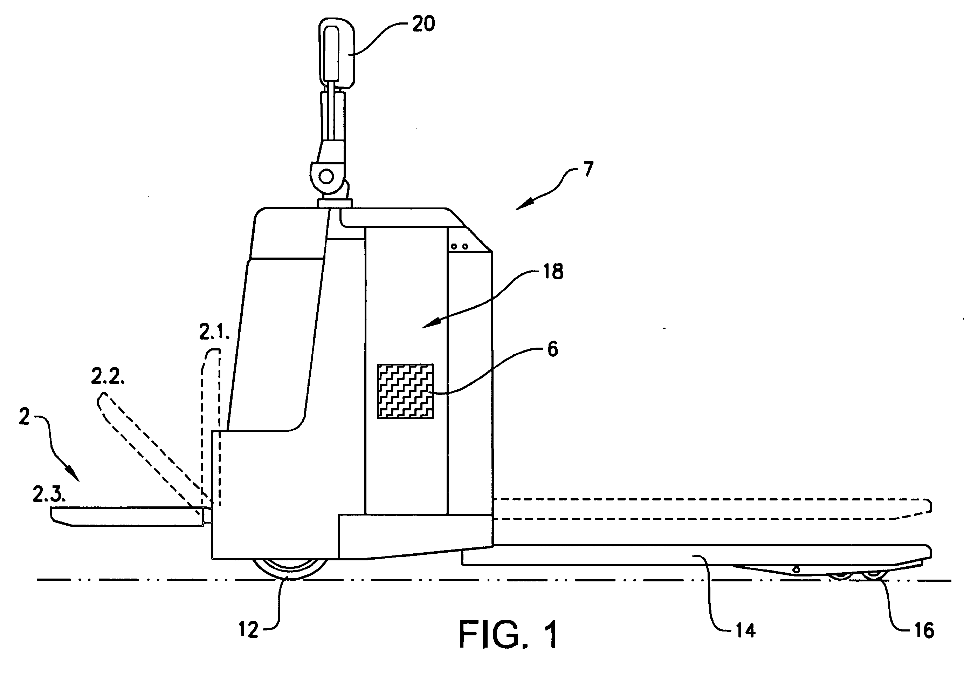

Figure 1 illustrates schematically an industrial truck with a pivotal platform for the driver. The truck comprises the system for detecting the position of the platform according to the invention. The truck illustrated in figure 1 is a so called tiller arm truck. This truck type, also known as stacker or order pick truck, is generally known in the art and its features will therefore only be briefly described. The truck 7 comprises a platform 2 which is pivotal between an upright position 2.1, an upward inclined position 2.2 and a horizontal position 2.3. The truck further comprises a housing 18 comprising the motor (not shown in figure 1) and the control system 6 of the truck. The control system 6 controls various means and functions in the truck, e.g. the performance of the motor, steering means and load engaging means. The truck also comprises a drive wheel 12 which is propelled by the motor and load engaging means 14 e.g. forks which are supported by forward support wheels 16. A steering means 20, e.g. a tiller arm is arranged such that the driver can steer the truck while walking behind the truck or while standing on the platform when the platform is pivoted into a horizontal position.

Above and in the following is by "upright position" meant that the angle between the platform and the chassis of the truck is 0°. By "upward inclined position" is meant that the angle between the platform and the chassis of the truck is 85°. By "horizontal position" is meant that the angle between the platform and the chassis of the truck is 90°. The "horizontal position", is the position of the platform when the driver is present on the platform. The weight of the driver then presses the platform down a few degrees from the upward inclined position. For ergonomic reasons, the position of the platform is preferably 90° when the driver is present on the platform.

Due to the weight of the driver and mechanical tolerances of the platform and the chassis the angular positions above may vary within a small interval e.g. +/-1-2°.

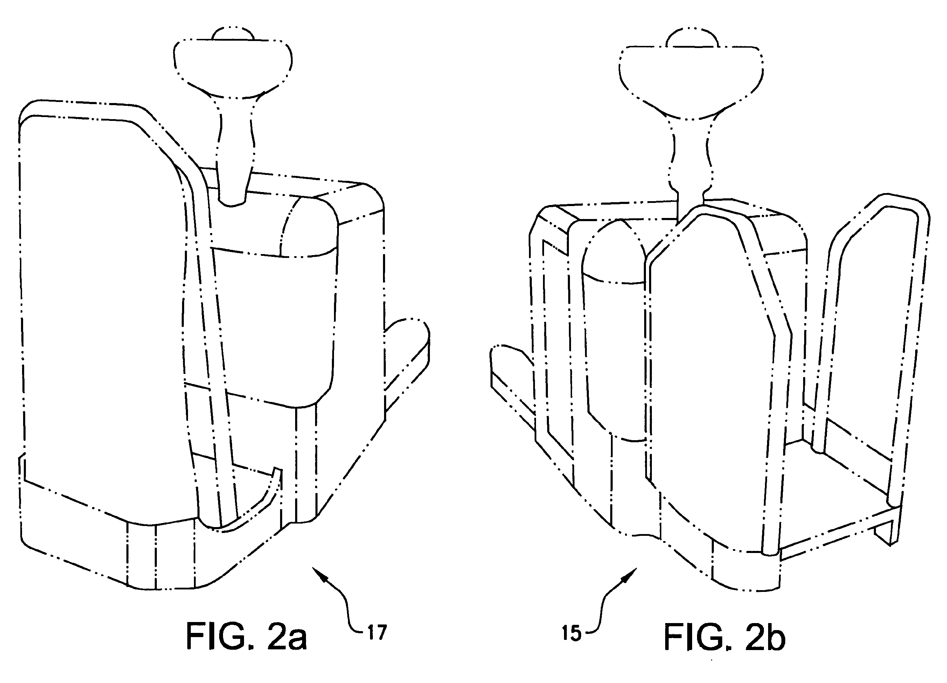

Figures 2a and 2b illustrates two embodiments of the tiller arm truck described in figure 1. The truck 15 illustrated in figure 2a comprises a pivotal driver's platform which is provided with a backrest for the driver. The truck 16 illustrated in figure 2b comprises a pivotal driver's platform which is provided with side protection for the driver. In these types of trucks the platform is pivotal between an upward inclined position, when the driver is not present on the platform and a horizontal position when the driver is present on the platform.

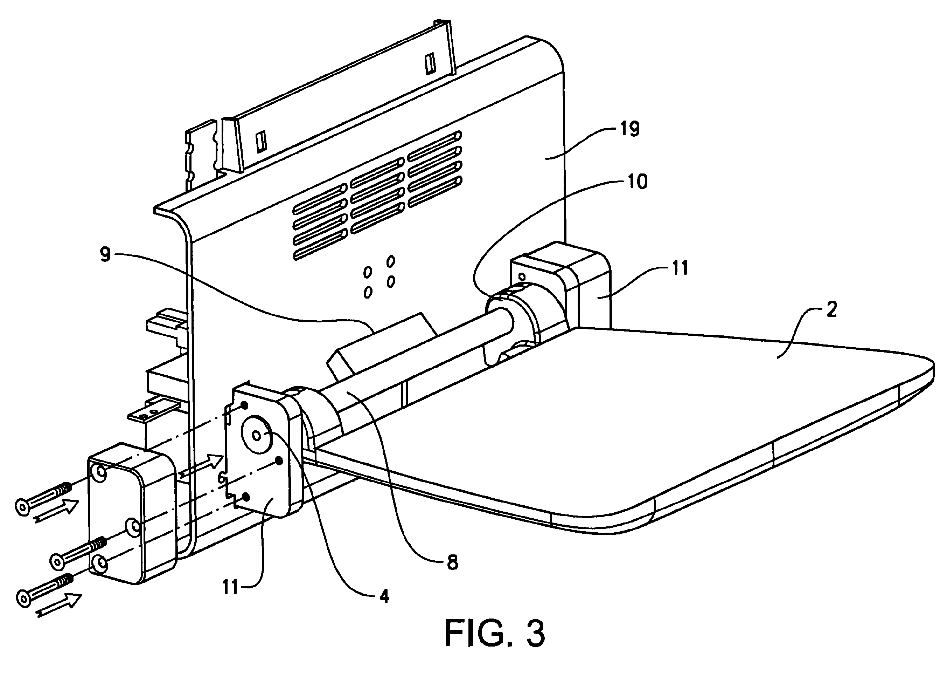

Figure 3 illustrates a detailed view of the rear of a truck showing the pivotal driver's platform and parts of the system for detecting the position of the platform. Figure 3 refers to the truck type described in figure 1. However, the functions described below apply to the truck types illustrated in figures 2a and 2b as well.

Referring to figure 3, the platform 2 comprises a shaft 8 which is attached to the platform by a first support 10. The shaft 8 is rotatable received in a second support 11 which is fixed to the rear of the truck, e.g. to the motor housing 18. Spring means 9 are arranged to return the platform in an upright position by the application of a torque on the shaft. The torque is dimensioned in force and direction so that the platform is returned in an upright position when no weight is applied to the platform. The spring means 9 may for example be a torsion spring or a gas spring that is attached to the chassis of the truck and the shaft 8 of the platform. The platform may be lowered by the application of a force directed opposite to the torque from the spring means 9. Normally the force is applied by the hand or the foot of the driver.

According to one alternative, the platform is pivoted from the upright position to the upward inclined position where the spring means provides resistance to further pivoting by hand or foot. The driver then enters the platform whereby the platform is pivoted a further few degrees to the horizontal position by the weight of the driver. When the driver steps down from the platform the platform is pivoted back to the upright position by the torque from the spring arrangement.

According to a second alternative, the platform is pivoted from the upright position to the upward inclined position. The platform is then held in the upward inclined position by the spring means 9. When the driver enters the platform, the platform is pivoted down to the horizontal position by the weight of the driver. When the driver leaves the platform the platform is pivoted back to the upward inclined position. If an upright directed force e.g. from the hand or foot of the driver is applied to the platform when the platform is in horizontal position, the platform is returned to the upright position.

In the truck type of the second embodiment described above in connection with figures 2a and 2b, the platform is pivoted from an upward inclined position to a horizontal position by the weight of the driver. If the driver steps down from the platform the platform is returned to the upward inclined position.

It is also possible to define other positions for the platform than the positions described above. For example, the platform may be pivoted from the upright position to a horizontal position and from there to a slightly downwards pointing position of e.g. approximate 95° and from this position be pivoted to a horizontal position by the weight of the driver.

The system for detecting the position of the platform (see figure 3) comprises a sensor 4 which detects the angle of rotation between the platform 2 and the chassis 19 of the truck and generates a signal which is proportional to the angle of rotation. The sensor 4 comprises one part 4.1 which is attached to the platform, for example the shaft 8 and one part 4.2 which is attached to the chassis of the truck, for example to the support 11 in which the shaft 8 is rotatable received (parts 4.1 and 4.2 are not shown in figure 3). When shaft 8 is rotated the sensor 4 generates a signal which is proportional to the angle that the shaft 8 is turned in relation to support 11. Since the shaft 8 is attached to the platform 2 and the support 11 is attached to the truck the signal is also proportional to the angle that the platform 6 is pivoted in relation to the truck.

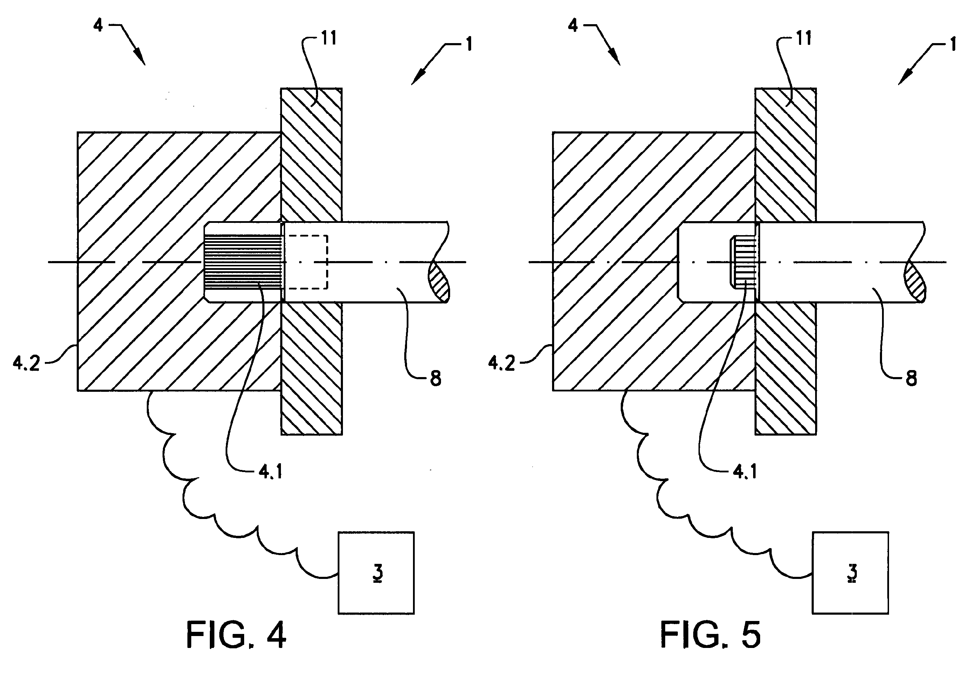

According to one embodiment (see figure 4), the sensor 4 is an analogous sensor or a digital sensor of high resolution. The sensor comprises a small shaft 4.1 which is attached to the end surface of shaft 8, for example by inserting the small shaft 4.1 in a bore on the end surface of shaft 8. The sensor further comprises a body 4.2 which is fixed to the support 11 of the chassis of the truck. The shaft 4.1 rotates in the body 4.2. The body 4.2 of the sensor 4 comprises circuits which generates signals, e.g. electric or magnetic signals when shaft 4.1 is rotated. Shaft 4.1 of the sensor 4 rotates with the shaft 8 whereby the sensor 4 generates a signal e.g. an electrical voltage signal which is proportional to the angle of rotation of the shaft.

According to a second embodiment, (see figure 5) the sensor 4 is a magnetic sensor. This type of sensor comprises a magnetic body 4.1 which is attached on the end of shaft 8. The sensor further comprises a sensor body 4.2 which is arranged on the support 11 in front of the magnetic body 4.1. A small gap e.g. 1-3 mm is provided between the magnet 4.1 and the sensor body 4.2 such that the parts are not in contact with each other. When shaft 8 is rotated the magnetic body 4.1 rotates with the shaft in front of the sensor body 4.2. The sensor body comprises circuits which detects changes in the magnetic field generated by the magnetic body as the body rotates. The sensor body thereby generates a signal e.g. an electrical voltage signal which is proportional to the angle of rotation of shaft 8.

The system for detecting the position of the platform further comprises a position determination unit 3. The position determination unit 3 may be included in the control system 6 of the truck but could also be a separate unit. The sensor 4 is connected to unit 3 which is connected to the control system 6 of the truck.

The unit 3 is configured with values of the signal from the sensor 4 corresponding to determined positions of the platform 2. This is achieved in that the platform 2 is pivoted in a determined position e.g. the upright position and the value of the signal generated by the sensor 4 in this position is stored in the unit 3 together with information about the position of the platform 2. Further signal values corresponding to other platform positions may also be stored in the unit 3, for example upward inclined position and the horizontal position.

As mentioned, the platform is lowered to the horizontal position by the weight of the driver. Due to the resistance provided by the spring of the platform, the angle of pivoting of the platform may be greater or smaller depending on the weight of the driver. Thus, a driver of heavy body weight presses the platform further down than a driver of light body weight. This may be accounted form in that different horizontal positions are determined for different types of drivers. Thus, one position of the platform is determined when a light weight driver is present on the platform and another position is determined when a driver of heavy weight is present on the platform. The unit 3 is then configured with corresponding signals from the sensor. The driver may select his personalized settings in the control system of the truck.

The position of the platform, during use of the truck, is determined in that the signal from the sensor 4 is compared to the stored sensor values in the unit 3. The position of the platform is then transmitted to the control system of the truck.

If the signal from the sensor 4 equals the stored signal value corresponding to upright position of the platform the unit 3 determines the position of the platform to be the upright position. Other positions of the platform 2 e.g. upward inclined position and/or horizontal position may be determined may be determined correspondingly.

After some time the stored sensor values and the stored platform positions may not correspond. This could be caused by wear of the mechanical parts relative the platform, e.g. the spring means 9 or by alteration of the position of the sensor 4. The unit 3 may then easily be reconfigured by repeating the procedure described above.

The control system 6 of the truck is arranged to control e.g. enable or disable safety functions in the truck for predetermined positions of the platform. The safety functions include for example limits to the maximum velocity of the truck, limits to the acceleration of the truck or preventing the truck from starting.

For example, if the unit 3 determines that the platform is in the upright position this indicates that the driver is walking behind the truck. The control system then sets the truck in a walking mode. In this mode the maximum velocity of the truck may be limited to e.g. 6 km/h.

If the unit 3 determines that the platform is in a horizontal position, thus the driver is present on the platform, the control system then sets the truck in a driving mode whereby the truck may be driven at a maximum velocity of 16 km/h.

If the unit 3 determines that the platform is in the upward inclined position driving of the truck may be prevented. The raising and lowering of the loading means may also be prevented. Driving of the truck or actuation of the loading means may also be disabled if unit 3 determines that the position of the platform deviates from the three described positions

## Claims

1. An industrial truck (7, 15, 17) comprising a pivotal platform (2) on which the driver of the industrial truck may stand, and a control system (6) arranged to control safety functions in the industrial truck (7, 15, 17) depending on the position of the platform (2), the industrial truck (7, 15, 17) comprising a system (1) for determining the position of the pivotal platform (2), **characterized in that** said system (1) comprises a sensor (4) which generates a signal proportional to the pivoting of the platform (2) and a position determination unit (3) which comprises stored sensor values for determined positions of the platform, wherein the position of the platform (2) is determined from the signal from the sensor (4) and the stored sensor values.

2. The industrial truck (7, 15, 17) according to claim 1 wherein the sensor (4) is an analogue sensor or a digital sensor of high resolution.

3. The industrial truck (7, 15, 17) according to claim 1 wherein the sensor (4) is a magnetic sensor.

4. The industrial truck (7, 15, 17) according to any of the preceding claims wherein the platform (2) comprises a shaft (8) which is arranged rotatable in a support (11) on the truck, wherein the sensor (4) comprises a first part (4.1) which is arranged on the end of the shaft (8) and second part (4.2) which is arranged on the support (11), wherein the signal from the sensor (4) is proportional to the angle of rotation between the shaft (8) and the support (11).

5. The industrial truck (7, 15, 17) according to any of the preceding claims, wherein the control system (6) is arranged to control safety functions in the truck when the platform (2) is in upright position or upward inclined position or horizontal position, wherein the position determination unit (3) comprises signal values corresponding to upright position or upward inclined position or horizontal position of the platform (2).

6. The industrial truck (7, 15, 17) according to claim 5 wherein the position determination unit (3) comprises several signal values corresponding to several different horizontal position of the platform.

## Patentansprüche

1. Flurförderer (7, 15, 17), aufweisend eine klappbare Plattform (2), auf welcher der Fahrer des Flurförderers stehen kann und ein Steuersystem (6) angeordnet um Sicherheitsfunktionen in dem Flurförderer (7, 15, 17), in Abhängigkeit von der Position der Plattform (2), zu steuern, wobei der Flurförderer (7, 15, 17) ein System (1) zur Bestimmung der Position der klappbaren Plattform (2) aufweist, **dadurch gekennzeichnet dass** das System (1) einen Sensor (4), der ein Signal proportional zu der Ausklappung der Plattform (2) erzeugt, und eine Positionsbestimmungseinheit (3) aufweist, welche gespeicherte Sensorwerte zur Bestimmung der Position der Plattform (2) aufweist, wobei die Position der Plattform aus dem Signal des Sensors (4) und den gespeicherten Sensorwerten bestimmt wird.

2. Flurförderer (7, 15, 17) gemäß Anspruch 1, wobei der Sensor (4) ein analoger oder digitaler Sensor hoher Auflösung ist.

3. Flurförderer (7, 15, 17) gemäß Anspruch 1, wobei der Sensor (4) ein Magnetsensor ist.

4. Flurförderer (7, 15, 17) gemäß einem der vorangegangenen Ansprüche, wobei die Plattform (2) eine Achse (8), die drehbar in einer Halterung (11) am Flurförderer angeordnet ist, aufweist, wobei der Sensor (4) ein erstes Teil (4.1), welches am Ende der Achse (8) angeordnet ist und ein zweites Teil (4.2) aufweist, welches an der Halterung (11) angeordnet ist, wobei das Signal von dem Sensor (4) proportional zu dem Rotationswinkel zwischen Achse (8) und Halterung (11) ist.

5. Flurförderer (7, 15, 17) gemäß einem der vorangegangenen Ansprüche, wobei das Steuersystem (6) angeordnet ist um die Sicherheitsfunktionen in dem Flurförderer zu steuern wenn die Plattform (2) in einer aufrechten Position oder in einer aufwärts geneigten Position oder in einer horizontalen Position ist, wobei die Positionsbestimmungseinheit (3) zur aufrechten Position oder aufwärts geneigten Position oder horizontalen Position der Plattform (2) korrespondierende Signalwerte aufweist.

6. Flurförderer (7, 15, 17) gemäß Anspruch 5, wobei die Positionsbestimmungseinheit (3) mehrere, zu den mehreren verschiedenen horizontalen Positionen der Plattform korrespondierende Signalwerte, aufweist.

## Revendications

1. Chariot de manutention (7, 15, 17) comprenant une plate-forme pivotante (2) sur laquelle le conducteur du chariot de manutention peut se tenir debout, et un système de commande (6) agencé de façon à commander des fonctions de sécurité dans le chariot de manutention (7, 15, 17) selon la position de la plate-forme (2), le chariot de manutention (7, 15, 17) comprenant un système (1) pour déterminer la position de la plate-forme pivotante (2), **caractérisé en ce que** ledit système (1) comprend un capteur (4) qui génère un signal proportionnel au pivotement de la plate-forme (2) et une unité de détermination de position (3) qui comprend des valeurs de capteur stockées pour des positions déterminées de la plate-forme, dans lequel la position de la plate-forme (2) est déterminée à partir du signal en provenance du capteur (4) et des valeurs de capteur stockées.

2. Chariot de manutention (7, 15, 17) selon la revendication 1, dans lequel le capteur (4) est un capteur analogique ou un capteur numérique à résolution élevée.

3. Chariot de manutention (7, 15, 17) selon la revendication 1, dans lequel le capteur (4) est un capteur magnétique.

4. Chariot de manutention (7, 15, 17) selon l'une quelconque des revendications précédentes , dans lequel la plate-forme (2) comprend un arbre (8) qui est agencé de manière rotative dans un support (11) sur le chariot, dans lequel le capteur (4) comprend une première partie (4.1) qui est agencée sur l'extrémité de l'arbre (8) et une seconde partie (4.2) qui est agencée sur le support (11), dans lequel le signal en provenance du capteur (4) est proportionnel à l'angle de rotation entre l'arbre (8) et le support (11).

5. Chariot de manutention (7, 15, 17) selon l'une quelconque des revendications précédentes, dans lequel le système de commande (6) est agencé de façon à commander des fonctions de sécurité dans le chariot lorsque la plate-forme (2) se trouve dans une position verticale ou dans une position inclinée ascendante ou dans une position horizontale, dans lequel l'unité de détermination de position (3) comprend des valeurs de signal correspondant à une position verticale ou à une position inclinée ascendante ou à une position horizontale de la plate-forme (2).

6. Chariot de manutention (7, 15, 17) selon la revendication 5, dans lequel l'unité de détermination de position (3) comprend plusieurs valeurs de signal correspondant à plusieurs positions horizontales différentes de la plate-forme.
